(19) Europäisches Patentamt
European Patent Office
Office européen des brevets

(11) EP 3 833 522 B1

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **19739513.0**

(22) Anmeldetag: **12.06.2019**

(51) Internationale Patentklassifikation (IPC):
***B29C 70/12*** (2006.01) ***C08G 18/62*** (2006.01)
***C08G 18/70*** (2006.01) ***C08G 18/76*** (2006.01)
***C08J 5/04*** (2006.01) ***C08J 5/06*** (2006.01)
***C08J 5/10*** (2006.01)

(52) Gemeinsame Patentklassifikation (CPC):
**B29C 70/12; C08G 18/6237; C08G 18/6254; C08G 18/706; C08G 18/7664; C08G 18/7671; C08J 5/045; C08J 5/06; C08J 5/10;** C08J 2375/04; C08J 2433/06

(86) Internationale Anmeldenummer:
**PCT/EP2019/065309**

(87) Internationale Veröffentlichungsnummer:
**WO 2020/030330 (13.02.2020 Gazette 2020/07)**

(54) **VERFAHREN ZUR HERSTELLUNG EINES THERMOVERFORMBAREN POLYMER/ FASER-KOMPOSITS**

METHOD FOR PRODUCING A THERMODEFORMABLE POLYMER/FIBER COMPOSITE

PROCÉDÉ DE FABRICATION D’UN COMPOSITE POLYMÈRE/FIBRE THERMOFORMABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2018 EP 18188499**

(43) Veröffentlichungstag der Anmeldung:
**16.06.2021 Patentblatt 2021/24**

(73) Patentinhaber: **BASF SE**
**67056 Ludwigshafen am Rhein (DE)**

(72) Erfinder:
- **KALBE, Michael**
**67056 Ludwigshafen (DE)**
- **FLORY, Mirko**
**67056 Ludwigshafen (DE)**
- **SCHEIDHAUER, Rainer**
**67056 Ludwigshafen (DE)**
- **HORLER, Hans**
**67056 Ludwigshafen (DE)**

(74) Vertreter: **BASF IP Association**
**BASF SE**
**GBI - Z078**
**67056 Ludwigshafen (DE)**

(56) Entgegenhaltungen:
**EP-A1- 1 203 647** **EP-A1- 1 789 243**
**EP-A1- 2 172 333** **EP-A1- 2 301 344**
**WO-A1-2017/140520**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 833 522 B1

## Beschreibung

Die Erfindung betrifft ein Verfahren zur Herstellung eines thermoverformbaren Polymer/Faser-Komposits unter Verwendung eines faserförmigen Substrats.

Ferner betrifft die Erfindung die nach dem Verfahren zugänglichen Polymer/Faser-Komposite selbst sowie deren Verwendung zur Herstellung von Polymer/FaserFormteilen, wie beispielsweise Fußbodenbeläge, Möbelformteile oder Wanddekorteile.

Die Herstellung von Holzfaserplatten erfolgt im Wesentlichen ausgehend von Rundholz, aber auch von Hackschnitzeln oder sogenannten Schwarten. Nach der Entrindung des Rundholzes wird dieses ebenso wie die Schwarten in Trommelhackern zu Hackschnitzeln zerkleinert. Nach der Abtrennung von Verunreinigungen wie Sand oder Steinen werden die Hackschnitzel zuerst in einem Vordämpfbehälter bei 100 °C einer hydrothermischen Vorbehandlung mittels Wasserdampf unterzogen. Daran anschließend werden die vorgedämpften Holzschnitzel in den sogenannten Kocher überführt, wo sie für zwei bis fünf Minuten in Wasser einer Temperatur von 140 bis 180 °C und einem Druck von 4 bis 8 bar (Überdruck) ausgesetzt werden. Danach werden die erweichten Hackschnitzel in den sogenannten Refiner überführt, wo sie ebenfalls bei einem Druck von 4 bis 8 bar (Überdruck) zwischen zwei relativ zueinander in einem Abstand von ca. 3 bis 0,1 mm rotierenden gerillten Mahlscheiben zermahlen und dabei zerfasert werden. Daran anschließend wird der erhaltene wässrige Holzfaserbrei in die sogenannte Blowline überführt, einem Rohr, welches einen deutlich geringeren Druck aufweist, was dazu führt, dass das Wasser verdampft und so als gasförmiges Transportmittel für die Holzfasern durch die Blowline dient (hydropneumatische Förderung). Durch zusätzliches Einblasen von aufgeheizter trockener Luft in die Blowline werden die Holzfasern getrocknet und pneumatisch weitertransportiert. Um einen möglichst gleichmäßigen Auftrag des zur Herstellung der Holzfaserplatten benötigten wässrigen, duroplastisch aushärtenden Bindemittels, wie insbesondere Formaldehydharze, wie Harnstoff/Formaldehyd-, Phenolformaldehyd-, Melaminformaldehyd-, Melamin/Harnstoff/Formaldehyd- oder Melamin/Phenol/Formaldehyd-Harze oder Isocyanate, wie Methylendiisocyanat oder Toluidendiisocyanat auf den Fasern zu gewährleisten, wird das wässrige, duroplastisch aushärtende Bindemittel vor dem Einblasen der aufgeheizten trockenen Luft an einer oder mehreren Stellen in die Blowline eingesprüht. Die nach der Trocknung anfallenden "beleimten" Fasern werden abgeschieden und in einen Faserflor (Fasermatte) überführt. Diese Fasermatte wird gegebenenfalls mittels einer ,kalten' Vorverdichtung komprimiert und anschließend unter Druck und hoher Temperatur (150 bis 230 °C) zu einem plattenförmigen Holzwerkstoff mit einer Dichte von 250 bis 1000 kg/$m^3$ verpresst. Durch die Verwendung duroplastisch härtender Bindemittel sind die so erhaltenen Holzfaserplatten jedoch nicht mehr thermisch verformbar.

Zur Herstellung thermisch verformbarer Formkörper, insbesondere Holzfaserplatten offenbart die WO 2007/73218 ganz allgemein die Verwendung von thermoplastischen Bindemittel in flüssiger oder partikulärer Form. In diesem Zusammenhang werden u.a. auch wässrige Bindemittel-Dispersionen genannt. Als thermoplastische Bindemittel werden jedoch ganz allgemein geeignete Polymere offenbart und dabei in unspezifischer Weise eine Vielzahl völlig unterschiedlicher Polymerer wie beispielsweise Acrylatpolymere, Urethanpolymere, Polyvinylchlorid, Polystyrol, Polyvinylalkohol, Polyamide, Polyester, aber auch Stärken und deren Derivate, Cellulosederivate, Proteine, Polysäuren, Polyisocyanate sowie reaktive Harzsysteme, wie Epoxyharze, ungesättigte Polyester, Urethan/Isocyanat-Harze oder Vorkondensate unterschiedlichster Formaldehydharze etc. genannt. In den Beispielen werden Pellets, Fasern, Pulver oder Schuppen von Polypropylen, säuremodifiziertes Polypropylen, Polymilchsäurefasern, Polyvinylalkohol, Polyolefincopolmer-Dispersionen, wie Ethylen/Acrylsäure- oder Ethylen/Maleinsäureanhydrid-Copolymerdispersionen ohne nähere Spezifizierung verwendet.

Ein verbessertes Verfahren zur Herstellung von thermoverformbaren Formteilen wird in der WO 2017/140520 beschrieben, gemäß welchem in einem Gasstrom, vorteilhaft in einer Blowline, eine über eine spezifische wässrige Emulsionspolymerisation zugängliche wässrige Polymerdispersion mit einem faserförmigen Substrat in Kontakt gebracht, anschließend getrocknet und zu einem thermoverformbaren Polymer/Faser-Komposit verdichtet wird, welches dann parallel oder in einen nachgeschalteten Verfahrensschritt zu einem Polymer/Faser-Formteil überführt wird. Weisen diese Polymer/Faser-Formteile jedoch scharfe Kanten oder keine glatten, sondern mit einem Muster geprägte Oberflächen, beispielsweise entsprechend einer Holzmaserung oder einem geometrischen Muster, auf, so vermögen diese scharfkantigen und/oder geprägten Polymer/Faser-Formteile in ihrer Wasserbeständigkeit nicht immer voll zu befriedigen.

Aufgabe für die vorliegende Erfindung war es daher, ein Verfahren zur Herstellung eines thermoverformbaren Polymer/Faser-Komposits aus faserförmigen Substraten und einer wässrigen Dispersion eines wirksam anhaftenden Polymeren, zur Verfügung zu stellen, dessen daraus hergestelltes Polymer/Faser-Formteil eine verbesserte Wasserbeständigkeit sowie eine vorteilhafte Prägbarkeit aufweisen.

Die Aufgabe wurde überraschend durch das folgende definierte Verfahren gelöst Die vorliegende Erfindung ist durch die Ansprüche definiert.

Ein kennzeichnendes Merkmal des erfindungsgemäßen Verfahrens ist, dass ein faserförmiges Substrat in einen Gasstrom eingebracht wird. Erfindungsgemäß können alle faserförmigen Substrate eingesetzt werden. Dabei soll unter

einem faserförmigen Substrat solche Partikel verstanden werden, deren Verhältnis von ihrer längsten Ausdehnung zu ihrer kürzesten Ausdehnung wenigstens ≥ 5, vorteilhaft ≥ 10 und insbesondere vorteilhaft ≥ 50 und deren kürzesten Ausdehnung ≤ 2 mm, vorteilhaft ≥ 0,001 und ≤ 0,5 mm und insbesondere vorteilhaft ≥ 0,001 und ≤ 0,1 mm beträgt. Wesentlich ist, dass die kürzeste Ausdehnung in einem Winkel von 90 ° zur Verbindungslinie ihrer längsten Ausdehnung bestimmt wird.

Bei den faserförmigen Substraten kann es sich um Naturfasern, wie pflanzliche, tierische und mineralische Fasern oder um künstlich hergestellte Chemiefasern aus natürlichen oder synthetischen Polymeren handeln. Beispiele für pflanzliche Fasern sind Baumwollfasern, Flachsfasern, Hanffasern, Kenaffasern, Jutefasern, Holzfasern oder Sisalfasern, Beispiele für tierische Fasern sind Wolle oder andere Tierhaare, ein Beispiel für mineralische Fasern ist Steinwolle, ein Beispiel für Chemiefasern natürlichen Ursprungs sind Viskosefasern und Beispiele für Chemiefasern auf Basis synthetischer Polymere sind Polyesterfasern, wie Polytrimethylenterephthalat-, Polyethylennaphthalat-, Polyethylenterephthalat- oder Polybutylenterephthalatfasern sowie die unterschiedlichen Polycarbonatfasern, Polyolefinfasern, wie insbesondere Polyethylen- oder Polypropylenfasern, Polyamidfasern, wie Polycaprolactamfasern (Polyamid 6), Polyamidfasern aus Hexamethylendiamin und Adipinsäure (Polyamid 6,6), Polyamidfasern aus Hexamethylendiamin und Terephthalsäure (Polyamid 6T), Polyamidfasern aus para-Phenylendiamin und Terephthalsäure (Aramid) sowie Mineralfasern, wie Glasfasern, Carbonfasern oder Basaltfasern. Mit Vorteil werden erfindungsgemäß jedoch Naturfasern, insbesondere pflanzlichen Ursprungs und insbesondere vorteilhaft Holzfasern eingesetzt, wie sie insbesondere aus einem Refiner erhalten werden.

Unter einem Gasstrom soll im Rahmen der vorliegenden Erfindung der gerichtete Transport eines gasförmigen Stoffes entlang eines Druckgefälles, beispielsweise in einem Behälter oder in einem Rohr, verstanden werden. Prinzipiell können alle Stoffe eingesetzt werden, welche unter den Transportbedingungen (insbesondere Druck und Temperatur) gasförmig sind. Beispielsweise werden organische und/oder anorganische Lösungsmitteldämpfe, wie insbesondere vorteilhaft Wasserdampf oder stickstoffhaltige Gasgemische, wie insbesondere Luft eingesetzt. Erfindungsgemäß vorteilhaft werden Wasserdampf/Luft-Gemische in breitem Mischungsverhältnis eingesetzt, wie sie insbesondere bei der Holzfaserherstellung mittels Refiner und Blowline auftreten.

Erfindungsgemäß wird das faserförmige Substrat im Gasstrom mit einer wässrigen Dispersion eines Polymeren P mit einer Glasübergangstemperatur Tg und einer organischen Di-oder Polyisocyanatverbindung I in Kontakt gebracht. Erfolgt dieses Inkontaktbringen in einer Blowline, vorteilhaft über ein oder mehrere Einspritzdüsen, so ist darauf zu achten, dass das Inkontaktbringen mit der wässrigen Dispersion des Polymeren P in der Blowline in Strömungsrichtung an einer Stelle oder mehreren Stellen erfolgt, bevor die aufgeheizte trockene Luft zur Trocknung der Holzfasern eingeblasen wird. Mit Vorteil wird das faserförmige Substrat in Gasströmungsrichtung über unterschiedlich plazierte Düsen zuerst mit der wässrigen Dispersion des Polymeren P und erst danach mit der organischen Di- oder Polyisocyanatverbindung I in Kontakt gebracht. Dabei wird das faserförmige Sutbstrat in Gasströmungsrichtung mit der organischen Di- oder Polyisocyanatverbindung I besonders vorteilhaft im letzten Drittel und bevorzugt im letzten Zehntel der Blowline in Kontakt gebracht.

Daran anschließend wird das mit der wässrigen Dispersion des Polymeren P und der organischen Di- oder Polyisocyanatverbindung I in Kontakt gebrachte faserförmige Substrat im Gasstrom fertig getrocknet und anschließend abgeschieden. Die Trocknung des erhaltenen faserförmigen Substrats erfolgt beispielsweise durch Abtrennung und Kondensation des Wasserdampfes oder in einer Blowline durch Einbringen von so viel aufgeheizter trockener Luft, dass die relative Luftfeuchtigkeit im resultierenden Gasgemisch auf ≤ 10 % oder sogar ≤ 5 % abgesenkt wird. Durch diese Maßnahme erfolgt die Trocknung des Gemisches aus faserförmigen Substrat, Polymeren P sowie organischer Di- oder Polyisocyanatverbindung I. Unter Trocknung soll im Rahmen dieser Schrift verstanden werden, wenn der Restfeuchtegehalt des erhaltenen Substrat/Polymer/Isocyanat-Gemisches auf ≤ 15 Gew.-% und vorteilhaft auf ≤ 10 Gew.-%, bevorzugt auf ≥ 5 und ≤ 10 Gew.-% herabgesetzt wird. Unter Restfeuchtegehalt wird im Rahmen dieser Schrift die prozentuale Gewichtsdifferenz, bezogen auf das eingesetzte Substrat/Polymer/Isocyanat-Gemisch, verstanden, welche sich ergibt, wenn man 1 g Substrat/Polymer/Isocyanat-Gemisch im Trockenschrank für eine Stunde bei 120 °C trocknet. Die Abscheidung des Substrat/Polymer/Isocyanat-Gemisches erfolgt nach den üblichen Methoden zur Feststoffabscheidung aus Gasgemischen, wie beispielsweise durch Siebe oder durch Ausnutzung von Zentrifugalkräften über Zyklonabscheider.

Daran anschließend wird das erhaltene abgeschiedene Substrat/Polymer/IsocyanatGemisch erfindungsgemäß in einen Faserflor überführt, beispielsweise durch entsprechendes Aufstreuen des abgeschiedenen Substrat/Polymer/Isocyanat-Gemisches auf eine Fläche oder im kontinuierlichen Betrieb auf ein Förderband. Dieser Faserflor kann erfindungsgemäß, gegebenenfalls nach einer mechanischen Vorverdichtung bei einer Temperatur deutlich unterhalb der Glasübergangstemperatur Tg, eine Dicke von ≥ 1 und ≤ 50 cm, vorteilhaft ≥ 1 und ≤ 30 cm und insbesondere vorteilhaft ≥ 1 und ≤ 15 cm und eine Dichte von ≥ 20 und ≤ 700 g/l, oft ≥ 50 und ≤ 500 g/l und häufig ≥ 100 und ≤ 350 g/l aufweisen.

Daran anschließend wird der so erhaltene Faserflor bei einer Temperatur ≥ Tg zu einem thermoverformbaren Polymer/Faser-Komposit verdichtet. Dabei wird unter Verdichtung verstanden, wenn der Faserflor bei einer Temperatur ≥ Tg unter Druck zu einem thermoverformbaren Polymer/Faser-Komposit verpresst wird. Dabei erhöht sich die Dichte des

Polymer/Faser-Komposits im Vergleich zum entsprechenden Faserflor, abhängig vom eingesetzten faserförmigen Substrat, um einen Faktor ≥ 3 und vorteilhaft um einen Faktor ≥ 6. In entsprechender Weise verringert sich auch die Dicke des Polymer/Faser-Komposits im Vergleich zum entsprechenden Faserflor. Von Bedeutung in diesem Zusammenhang ist, dass das erfindungsgemäße Polymer/Faser-Komposit vorteilhaft eine flächenförmige ebene Form aufweist. Selbstverständlich kann das erfindungsgemäße Polymer/Faser-Komposit aber auch - abhängig von der gewählten Pressform - beliebige nichtebene dreidimensionale Formen aufweisen.

Verfahrenswesentlich ist, dass die wässrige Dispersion des Polymeren P durch radikalisch initiierte Emulsionspolymerisation eines Gemisches von ethylenisch ungesättigten Monomeren P [Monomere P] in einem wässrigen Medium in Gegenwart eines Polymeren A hergestellt wurde, wobei das Polymere A aus

| | |
|---|---|
| 80 bis 100 Gew.-% | wenigstens einer ethylenisch ungesättigten Mono- und/oder Dicarbonsäure [Monomere A1] und |
| 0 bis 20 Gew.-% | wenigstens eines weiteren ethylenisch ungesättigten Monomeren, welches sich von den Monomeren A1 unterscheidet [Monomere A2], |

in einpolymerisierter Form aufgebaut ist.

Als Monomere A1 kommen insbesondere 3 bis 6 C-Atome aufweisende α,β-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure, Maleinsäure und/oder Maleinsäureanhydrid, wobei Acrylsäure insbesondere bevorzugt ist.

Zur Herstellung des erfindungsgemäß eingesetzten Polymeren A kommt als wenigstens ein Monomer A2 insbesondere in einfacher Weise mit Monomer A1 radikalisch copolymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen [20 °C, 1 atm (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren A2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren A2, enthalten.

Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten vernetzenden Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt. Insbesondere bevorzugt werden jedoch keinerlei derartige vernetzende Monomeren A2 zu Herstellung des Polymeren A eingesetzt.

Vorteilhaft werden zur Herstellung der Polymeren A als Monomere A2 nur solche Monomerenmischungen eingesetzt, welche zu

| | |
|---|---|
| 90 bis 100 Gew.-% | Ester der Acryl- und/oder Methacrylsäure mit 1 bis 12 C-Atome aufweisenden Alkanolen, oder |
| 90 bis 100 Gew.-% | Styrol und/oder Butadien, oder |
| 90 bis 100 Gew.-% | Vinylchlorid und/oder Vinylidenchlorid, oder |
| 90 bis 100 Gew.-% | Vinylacetat, Vinylpropionat und/oder Ethylen |

enthalten.

Erfindungsgemäß beträgt der einpolymerisierte Anteil an Monomeren A2 im Polymer A 0 bis 20 Gew.-%, vorteilhaft ≤ 10 Gew.-% oder ≤ 5 Gew.-% und ≥ 0,1 Gew.-%. In einer weiteren vorteilhaften Ausführungsform enthält das Polymere A keinerlei Monomeren A2 einpolymerisiert. Dementsprechend ist das Polymere A zu ≥ 80 Gew.-%, vorteilhaft zu ≥ 90 Gew.-% oder ≥ 95 Gew.-% und in einer weiteren Ausführungsform zu 100 Gew.-% aus Monomeren A1 in einpolymerisierter Form aufgebaut, wobei als Monomeren A1 Acrylsäure, Methacrylsäure, Maleinsäure und/oder Maleinsäureanhydrid besonders bevorzugt sind.

Die erfindungsgemäß eingesetzten Polymere A werden in der Regel durch radikalisch initiierte Polymerisation der Monomeren A in einem wässrigen Medium hergestellt. Mit Vorteil erfolgt die Herstellung der Polymeren A in Anwesenheit wenigstens eines Radikalkettenreglers, wobei schwefel-, stickstoff-, und/oder phosphorhaltigen Radikalkettenregler, welche bei 20 °C und 1 atm in entionisiertem Wasser eine Löslichkeit ≥ 5 g/100 g Wasser aufweisen, besonders bevorzugt sind.

Die prinzipielle Herstellung der Polymeren A ist dem Fachmann geläufig (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als schwefelhaltige Radikalkettenregler werden beispielsweise Mercaptoalkanole, wie 2-Mercaptoethanol, 2-Mercaptopropanol oder 3-Mercaptopropanol, Alkalimetallhydrogensulfite, wie Natriumhydrogensulfit oder Kaliumhydrogensulfit, sowie Thioschwefelsäure und deren Alkalimetallsalze oder 3-Mercapto-2-aminopropansäure (Cystein), als stickstoffhaltige Radikalkettenregler beispielsweise Hydroxylamin(ammonium)-Verbindungen, wie Hydroxylammoniumsulfat und als phosphorhaltige Radikalkettenregler beispielsweise phosphorige Säure, hypophosphorige Säure, metaphosphorige Säure, Orthophosphorsäure, Pyrophosphorsäure oder Polyphosphorsäure und deren Alkalimetallsalze, insbesondere deren Natrium- oder Kaliumsalze, vorteilhaft Natriumhypophosphit oder Natriumdihydrogenphosphat eingesetzt.

Insbesondere vorteilhaft ist der Radikalkettenregler ausgewählt unter hypophosphoriger Säure und deren Alkalimetallsalze, insbesondere Natriumhypophosphit, Alkalimetallhydrogensulfite, insbesondere Natriumhydrogensulfit, Hydroxylamoniumsulfat und/oder 2-Mercaptoethanol.

Bei der Herstellung der Polymeren A ist es vorteilhaft, wenn die Menge des Radikalkettenreglers so gewählt wird, dass das zahlenmittlere Molekulargewicht der Polymeren A ≥ 1000 und ≤ 30000 g/mol, vorteilhaft ≥ 1000 und ≤ 20000 g/mol und insbesondere vorteilhaft ≥ 3000 und ≤ 20000 g/mol beträgt. Die erforderliche Menge des Radikalkettenreglers und die entsprechenden Polymerisationsbedingungen kennt der Fachmann oder kann von diesem in einfachen Routineversuchen ermittelt werden.

Die Molekulargewichtsbestimmung für die Polymeren A erfolgt im Rahmen dieser Schrift generell unter Verwendung von zwei in Reihe geschalteten TSKgel G 3000 PWXL-Säulen der Firma Tosoh bei einer Temperatur von 35 °C, mit einem Elutionsmittel bestehend aus entionisiertem Wasser mit 0,01 mol/l Phosphatpuffer pH-Wert 7,4 und 0,01 mol/l $NaN_3$, einer Durchflußgeschwindigkeit von 0,5 ml pro Minute, einer Injektionsmenge von 100 μl, einer Konzentration der injizierten Lösung von 1 bis 2 mg pro ml sowie einem DRI-Detektor der Firma Agilent Technologies GmbH. Als innerer Standard/Eichsubstanz wurde Polyacrylsäure-Natriumsalz mit unterschiedlichen definierten Molekulargewichten verwendet.

Bei der Herstellung des erfindungsgemäß eingesetzten Polymeren P ist es möglich, gegebenenfalls eine Teil-

oder die Gesamtmenge an Polymeren A im wässrigen Polymerisationsmedium vorzulegen. Es ist aber auch möglich, die Gesamtmenge oder die gegebenenfalls verbliebene Restmenge an Polymeren A während der Polymerisationsreaktion gemeinsam mit den Monomeren P zuzudosieren. Die Gesamtmenge oder die gegebenenfalls verbliebene Restmenge an Polymeren A kann dem wässrigen Polymerisationsmedium dabei diskontinuierlich in einer oder mehreren Portionen oder kontinuierlich mit gleichbleibenden oder sich verändernden Mengenströmen zudosiert werden. Vorteilhaft wird die Gesamtmenge an Polymeren A vor Auslösung der Polymerisationsreaktion der Monomeren P im wässrigen Polymerisationsmedium vorgelegt. In einer weiteren vorteilhaften Ausführungsform wird das Polymere A "in-situ" im Polymerisationsmedium für die Polymerisation der Monomeren P hergestellt.

Von Bedeutung ist, dass das wässrige Polymerisationsmedium bei der Herstellung des Polymeren P neben dem Polymeren A zusätzlich noch Dispergierhilfsmittel enthalten kann, welche sowohl die Monomerentröpfchen als auch die durch die radikalisch initiierte Polymerisation der Monomeren P erhaltenen Dispersionsteilchen des Polymeren P in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Da das erfindungsgemäß eingesetzte Polymer A auch als Schutzkolloid wirken kann, werden erfindungsgemäß vorteilhaft keine zusätzlichen Schutzkolloide eingesetzt.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

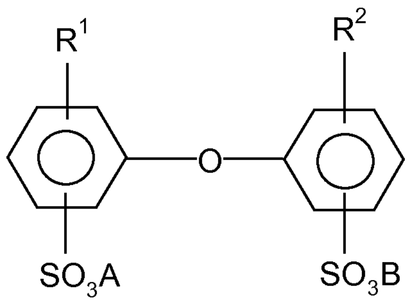

(I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Werden bei der Herstellung der wässrigen Dispersion des Polymeren P Dispergierhilfsmittel mitverwendet, so beträgt die Gesamtmenge an eingesetzten Dispergierhilfsmitteln, insbesondere Emulgatoren, 0,1 bis 5 Gew.-%, bevorzugt 1 bis 3 Gew.-%, jeweils bezogen auf die Gesamtmenge der Monomeren P (Gesamtmonomerenmenge P). In einer vorteilhaften Ausführungsform werden Emulgatoren als alleinige Dispergierhilfsmittel eingesetzt.

Werden bei der Herstellung der wässrigen Dispersion des Polymeren P Dispergierhilfsmittel mitverwendet, so ist es möglich, gegebenenfalls eine Teil- oder die Gesamtmenge an Dispergierhilfsmitteln als Bestandteil des das Polymere A enthaltenden wässrigen Mediums vorzulegen. Es ist aber auch möglich, die Gesamtmenge oder die gegebenenfalls verbliebene Restmenge an Dispergierhilfsmitteln während der Polymerisationsreaktion gemeinsam mit den Monomeren P zuzudosieren. Die Gesamtmenge oder die gegebenenfalls verbliebene Restmenge an Dispergierhilfsmitteln kann dem wässrigen Polymerisationsmedium dabei diskontinuierlich in einer oder mehreren Portionen oder kontinuierlich mit gleichbleibenden oder sich verändernden Mengenströmen zudosiert werden.

Erfindungswesentlich ist, dass bei der radikalisch initiierten wässrigen Emulsionspolymerisation der Monomeren P diese in Art und Menge so gewählt werden, dass das erhaltene Polymere P eine Glasübergangstemperatur Tg ≥ 20 °C, vorteilhaft ≥ 60 °C und insbesondere vorteilhaft ≥ 90 °C gemessen nach DIN EN ISO 11357-2 (2013-09) aufweist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer erfindungsgemäß eingesetzten wässrigen Dispersion des Polymeren P lediglich dadurch, dass die Monomeren P in Anwesenheit wenigstens eines Polymeren A polymerisiert werden und dabei in Art und Menge so gewählt werden, dass die gebildeten Polymeren P eine Glasübergangstemperatur Tg ≥ 20 °C gemessen nach DIN EN ISO 11357-2 (2013-09) aufweisen. Dabei ist es selbstverständlich, dass zur Herstellung der Polymere P im Rahmen der vorliegenden Schrift auch die dem Fachmann geläufigen Saat-, Stufen- und Gradientenfahrweisen mit umfasst sein sollen. Werden Stufenpolymere eingesetzt, so weist wenigstens das Polymere einer Stufe eine Glasübergangstemperatur Tg ≥ 20 °C auf. Mit Vorteil weisen wenigstens 50 Gew.-% und mit besonderem Vorteil wengistens 90 Gew.-% des Stufenpolymers ein Polymer P mit einer Glasübergangstemperatur Tg ≥ 20 °C, vorteilhaft ≥ 60 °C und insbesondere vorteilhaft ≥ 90 °C auf. Erfindungsgemäß vorteilhaft werden jedoch Einstufenpolymere mit einer Glasübergangstemperatur Tg ≥ 20 °C, vorteilhaft ≥ 60 °C und insbesondere vorteilhaft ≥ 90 °C als Polymere P eingesetzt.

Als Monomere P kommen insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die zur Herstellung des Polymeren P eingesetzte Menge aller Monomeren P (Gesamtmonomerenmenge P), einen Anteil ≥ 80 Gew.-% und bevorzugt ≥ 90 Gew.-% auf sich vereinen. In aller Regel weisen diese Monomeren in Wasser bei Normalbedingungen [20 °C, 1 atm (= 1,013 bar absolut)] lediglich eine mäßige bis geringe Löslichkeit auf.

Monomere P, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie

N-Vinylpyrrolidon, 2-Vinylpyridin, 4-Vinylpyridin, 2-Vinylimidazol, 2-Aminoethylacrylat, 2-Aminoethylmethacrylat, 2-Aminopropylacrylat, 2-Aminopropylmethacrylat, 3-Aminopropylacrylat, 3-Aminopropylmethacrylat, 2-(N,N-Dimethylamino) ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren P lediglich als modifizierende Monomere in Mengen ≤ 10 Gew.-% und bevorzugt ≤ 5 Gew.-%, bezogen auf die Gesamtmonomerenmenge P, enthalten.

Monomere P, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie 1,2-, 1,3- oder 1,4-Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C1-C8-Hydroxyalkylester wie 2-Hydroxyethyl-, 2-Hydroxypropyl-, 3-Hydroxy- oder 4-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen ≤ 10 Gew.-%, bevorzugt jedoch in Mengen ≤ 5 Gew.-%, jeweils bezogen auf die Gesamtmonomerenmenge P, eingesetzt.

In einer bevorzugten Ausführungsform sind die Monomeren P bei der Herstellung der Polymeren P zu ≥ 90 Gew.-% ausgewählt aus der Gruppe umfassend Olefine, vinylaromatische Monomere, Vinylhalogenide, Ester aus Vinylalkohol und 1 bis 18 C-Atome aufweisenden Monocarbonsäuren, Ester aus 3 bis 6 C-Atome aufweisenden α,β-monoethylenisch ungesättigten Mono- und Dicarbonsäuren mit 1 bis 12 C-Atome aufweisenden Alkanolen, Nitrile α,β-monoethylenisch ungesättigter Carbonsäuren sowie $C_{4-8}$-konjugierte Diene und zu ≤ 10 Gew.-% ausgewählt sind aus der Gruppe umfassend 3 bis 6 C-Atome aufweisende α,β-monoethylenisch ungesättigte Mono- und Dicarbonsäuren und deren Amide, sowie monoethylenisch ungesättigte Verbindungen, welche wenigstens eine Amino-, Epoxy-, Hydroxy-, N-Methylol- oder Carbonylgruppe aufweisen und Verbindungen, welche wenigstens zwei nicht konjugierte ethylenisch ungesättigte Doppelbindungen aufweisen.

In einer weiteren bevorzugten Ausführungsform werden zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 10,0 Gew.-% | Acrylsäure, Methacrylsäure, Glycidylacrylat, Glycidylmethacrylat, 2-Hydroxyethyl-, 2-Hydroxypropyl- und 3-Hydroxypropyl-, 2-Aminoethyl-, 2-Aminopropyl- und 3-Aminopropylacrylat und -methacrylat, 1,4- |
| Butylenglykoldiacrylat und -methacrylat, 1,2-, 1,3- und 1,4-Divinylbenzol, Allylacrylat und/oder Allylmethacrylat | |

eingesetzt, wobei sich die Mengen zu 100 Gew.-% aufsummieren.

In einer weiteren bevorzugten Ausführungsform werden zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat |

eingesetzt, wobei sich die Mengen zu 100 Gew.-% aufsummieren.

In einer besonders bevorzugten Ausführungsform werden zur Herstellung des Polymeren P

| | |
|---|---|
| ≥ 90 und ≤ 99,7 Gew.-% | Styrol und/oder Methylmethacrylat, |
| ≥ 0 und ≤ 9,9 Gew.-% | n-Butylacrylat und/oder 2-Ethylhexylacrylat, und |

(fortgesetzt)

| | |
|---|---|
| ≥ 0,1 und ≤ 5,0 Gew.-% | Acrylsäure, Methacrylsäure, 2-Hydroxyethyl-, 2-Hydroxypropyl- und 3-Hydroxypropyl-, 2-Aminoethyl-, 2-Aminopropyl- und 3-Aminopropylacrylat und/oder - methacrylat, |
| > 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat, sowie |
| > 0,1 und ≤ 4,0 Gew.-% | Glycidylacrylat und/oder Glycidylmethacrylat, |

und insbesondere

| | |
|---|---|
| ≥ 92 und ≤ 97,8 Gew.-% | Styrol und/oder Methylmethacrylat, |
| ≥ 0,1 und ≤ 2,0 Gew.-% | Acrylsäure und/oder 2-Hydroxyethylacrylat, |
| ≥ 0,1 und ≤ 2,0 Gew.-% | 1,4-Butylenglykoldiacrylat und/oder Allylmethacrylat, sowie |
| ≥ 2,0 und ≤ 4,0 Gew.-% | Glycidylacrylat und/oder Glycidylmethacrylat |

eingesetzt, wobei sich jeweils die Mengen zu 100 Gew.-% aufsummieren.

Die radikalisch initiierte wässrige Emulsionspolymerisation zur Herstellung der Polymeren P wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge P, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder DiCumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Neben der saatfreien Herstellungsweise kann zur Einstellung der Polymerteilchengröße die Emulsionspolymerisation zur Herstellung der Polymeren P nach dem Saatlatex-Verfahren oder in Gegenwart einer in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerdispersion im wässrigen Polymerisationsmedium vorzulegen und dann die Monomeren P in Gegenwart der Saatlatex zu polymerisieren. Hierbei wirken die Saat-Polymerteilchen als 'Polymerisationskeime' und entkoppeln die Polymerteilchenbildung und das Polymerteilchenwachstum. Während der Emulsionspolymerisation kann prinzipiell weiterer Saatlatex direkt dem wässrigen Polymerisationsmedium zugegeben werden. Hierdurch werden breite Größenverteilungen der Polymerteilchen erreicht, die insbesondere bei Polymerdispersionen mit hohem Feststoffgehalt oftmals erwünscht sind (vgl. hierzu beispielsweise DE-A 4213965). Anstelle der Zugabe einer definierten Saatlatex kann dieser auch in situ erzeugt werden. Hierzu wird beispielsweise eine Teilmenge der zur Polymerisation eingesetzten Monomeren P und des Radikalinitiators zusammen mit einer Teil- oder der Gesamtmenge des Polymeren A sowie gegebenenfalls zusätzlichen Dispergierhilfsmitteln vorgelegt und auf Reaktionstemperatur erwärmt, wobei eine relativ feinteilige Polymersaat entsteht. Anschließend wird im gleichen wässrigen Polymerisationsmedium die eigentliche Polymerisation nach dem Zulaufverfahren durchgeführt (siehe auch DE-A 4213965).

Vorteilhaft erfolgt die Herstellung der Polymeren P durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei

einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation der Monomeren bei 1 atm (= Atmosphärendruck = 1,013 bar absolut) oder unter erhöhtem Druck unter Inertgasatmosphäre, wie beispielsweise unter Stickstoff oder Argon durchgeführt.

Bei der radikalisch initiierten wässrigen Emulsionspolymerisation kann das wässrige Polymerisationsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt erfolgt die radikalisch initiierte wässrige Emulsionspolymerisation jedoch in Abwesenheit solcher Lösungsmittel.

Die erfindungsgemäß eingesetzten Polymere P weisen eine Glasübergangstemperatur Tg ≥ 20 °C gemessen nach DIN EN ISO 11357-2 (2013-09) auf. Mit Vorteil liegt die Glasübergangstemperatur der Polymeren P im Bereich ≥ 60 °C, insbesondere im Bereich ≥ 60 und ≤ 150 °C und mit besonderem Vorteil im Bereich ≥ 90 °C, insbesondere im Bereich ≥ 90 und ≤ 120 °C.

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg^1 + x_2/Tg^2 + .... x_n/Tg^n,$$

wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Die durch Emulsionspolymerisation zugänglichen wässrigen Dispersionen des Polymeren P weisen üblicherweise einen Feststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf.

Mit besonderem Vorteil liegen die Polymeren P in Form von Teilchen mit einem mittleren Teilchendurchmesser ≥ 10 und ≤ 1000 nm, vorteilhaft ≥ 30 und ≤ 600 nm und besonders vorteilhaft ≥ 100 bis ≤ 500 nm, bestimmt nach der Methode der quasielastische Lichtstreuung (ISO-Norm 13 321; cumulant z-average), vor.

Erfindungsgemäß liegt das Gewichtsverhältnis von Polymeren P (berechnet als Gesamtmenge an Monomeren P) zu Polymeren A im Bereich ≥ 1 und ≤ 10, vorteilhaft im Bereich ≥ 1,5 und ≤ 8 und insbesondere im Bereich ≥ 2 und ≤ 6.

Bei der Herstellung des Polymer/Faser-Komposits werden vorteilhaft ≥ 0,1 und ≤ 20 Gew.-% und mit besonderem Vorteil ≥ 0,5 und ≤ 15 Gew.-% und vorteilhaft ≥ 2 und ≤ 10 Gew.-% an Polymeren P (berechnet als Gesamtmenge an Monomeren P), bezogen auf die Menge an faserförmigen Substrat eingesetzt.

Neben dem Polymeren P wird im erfindungsgemäßen Verfahren noch wenigstens eine organische Di- oder Polyisocyanatverbindung I eingesetzt.

Dabei können die eingesetzten Di- oder Polyisocyanatverbindungen I sowohl aromatischer wie auch aliphatischer Struktur sein, wobei aromatische Di- oder Polyisocyanatverbindungen I bevorzugt sind.

Aromatische Di- oder Polyisocyanatverbindungen I sind solche, die mindestens ein aromatisches Ringsystem enthalten, also sowohl rein aromatische wie auch araliphatische Verbindungen.

Bei den aliphatischen Di- oder Polyisocyanatverbindungen I kommen sowohl alicyclische wie auch cycloaliphatische Verbindungen in Betracht.

Cycloaliphatische Di- oder Polyisocyanatverbindungen I sind solche, die mindestens ein cycloaliphatisches Ringsystem enthalten, während alicyclische Di- oder Polyisocyanatverbindungen I ausschließlich gerade oder verzweigte Kohlenwasserstoffreste aufweisen.

Die erfindungsgemäß einsetzbaren Diisocyantverbindungen weisen lediglich zwei Isocyanatgruppen während die Polyisocyanatverbindungen mehr als zwei Isocyanatgruppen aufweisen. Von Bedeutung ist aber, dass erfindungsgemäß auch die Umsetzungsprodukte der Di- oder Polyisocyanatverbindungen I mit sich selbst (Oligomerisierungsreaktionen der Isocyanatgruppen) umfasst sein sollen.

Beispiele für erfindungsgemäß einsetzbare Diisocyanatverbindungen I sind alicyclische Diisocyanate, wie Tetramethylendiisocyanat, Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanato-hexanoat),Trimethylhexandiisocyanat oder Tetramethylhexandiisocyanat, cycloaliphatische Diisocyanate, wie 1,4-, 1,3- oder 1,2-Diisocyanatocyclohexan, 4,4'- oder 2,4'-Di(isocyanatocyclo-hexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0$^{2.6}$]decan-Isomerengemische, sowie aromatische Diisocyanate, wie 2,4- oder 2,6-Toluylendiisocyanat und deren Isomerengemische, m- oder p-Xylylendiisocyanat, Diphenylmethandiisocyanat (MDI), insbesondere 2,2'-Diphenylmethandiisocyanat (2,2'-MDI), 2,4'-Diphenylmethandiisocyanat (2,4'-MDI) oder 4,4'-Diphenylmethandiisocyanat (4,4'-MDI) und deren Isomerengemische, 1,3- oder 1,4-Phenylendiisocyanat, 1-Chlor-2,4-pheny-lendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 2,2'-Diphenylmethandiisocyanat (2,2'-MDI), 2,4'-Diphenylmethandiisocyanat (2,4'-MDI) oder 4,4'-Diphenylmethandiisocyanat (4,4'-MDI) und deren Isomerengemische (MDI).

Beispiele für Polyisocyanatverbindungen I sind Triisocyanate, wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Von Bedeutung ist ferner, dass zu den erfindungsgemäß einsetzbaren Polyisocyanatverbindungen I auch die Oligomerisierungsprodukte der vorgenannen Diisocyanatverbinungen I zählen sollen, welche in der Regel eine mittlere NCO-Funktionalität von mindestens 1,8 aufweisen, welche jedoch bis zu 8 betragen kann. Bevorzugt liegt die mittlere NCO-Funktionalität im Bereich von 2 bis 5 und besonders bevorzugt im Bereich von 2,4 bis 4. Dabei liegt der Gehalt an Isocyanatgruppen nach der Oligomerisierung, berechnet als NCO = 42 g/mol, in der Regel im Bereich von 5 bis 25 Gew.-%.

Erfindungsgemäß sind aber auch folgende Polyisocyanatverbindungen I mit umfasst:

1) Isocyanuratgruppen aufweisende Polyisocyanate von aromatischen, alicyclischen und/oder cycloaliphatischen Diisocyanaten. Besonders bevorzugt sind hierbei die entsprechenden alicyclischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 Gew.-% bezogen auf das Polyisocyanat.

2) Uretdiongruppen aufweisende Polyisocyanate mit aromatisch, alicyclisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten im Bereich von 2 bis 3 auf.

3) Biuretgruppen aufweisende Polyisocyanate mit aromatisch, cycloaliphatisch oder alicyclisch gebundenen, bevorzugt cycloaliphatisch oder alicyclisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt im Bereich von 18 bis 24 Gew.-% und eine mittlere NCO-Funktionalität im Bereich von 2,8 bis 6 auf.

4) Urethan- und/oder Allophanatgruppen aufweisende Polyisocyanate mit aromatisch, alicyclisch oder cycloaliphatisch gebundenen, bevorzugt alicyclisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt im Bereich von 12 bis 24 Gew.-% und eine mittlere NCO-Funktionalität im Bereich von 2,0 bis 4,5. Diese Urethan- und/oder Allophanatgruppen aufweisenden Polyisocyanate treten häufig in Mischformen mit den unter 1) genannten Polyisocyanaten auf.

5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.

6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.

7) Uretonimin-modifizierte Polyisocyanate.

8) Carbodiimid-modifizierte Polyisocyanate.

9) Hyperverzweigte Polyisocyanate, wie sie beispielsweise bekannt sind aus der DE-A 10013186 oder DE-A 10013187.

10) Polyurethan-Polyisocyanat-Präpolymere, aus Di- und/oder Polyisocyanaten mit Alkoholen.

11) Polyharnstoff-Polyisocyanat-Präpolymere.

12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder alicyclisch gebundenen, bevorzugt cycloaliphatisch und/oder alicyclisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt im Bereich von 10 bis 25 Gew.-% und eine mittlere NCO-Funktionalität im Bereich von 3bis 8 auf.

13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.

14) Modifizierte Polyisocyanate für Dual Cure Anwendungen, d.h. Polyisocyanate, die neben den unter 1-11 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

In einer bevorzugten Ausführungsform wird als Di- oder Polyisocyanatverbindung I 2,2'-MDI, 2,4'-MDI, 4,4'-MDI und/oder oligomeres MDI, das aus höherkernigen Homologen des MDI, welche mindestens 3 aromatische Kerne und eine Isocyanat-Funktionalität von >2 aufweisen, besteht, oder Roh-MDI, welches bei der Herstellung von MDI anfällt, eingesetzt. In einer besonders bevorzugten Ausführungsform werden Mischungen aus mindestens einem Oligomer des MDI und mindestens einem der vorgenannten niedermolekularen MDI-Derivate 2,2'-MDI, 2,4'-MDI oder 4,4'-MDI (derartige Mischungen werden auch als polymeres MDI bezeichnet) eingesetzt.

Vorzugsweise enthält polymeres MDI neben zweikernigem MDI ein oder mehrere mehrkernige Kondensationsprodukte des MDI mit einer Funktionalität größer 2, insbesondere 3 oder 4 oder 5. Polymeres MDI ist bekannt und wird häufig auch als Polyphenylpolymethylenpolyisocyanat bezeichnet.

Die (mittlere) Funktionalität eines Polyisocyanates, welches polymeres MDI enthält, kann im Bereich von ungefähr 2,2 bis ungefähr 4 variieren, insbesondere von 2,5 bis 3,8 und insbesondere von 2,7 bis 3,5. Eine solche Mischung von MDI-basierten mehrfunktionellen Isocyanaten mit unterschiedlichen Funktionalitäten ist insbesondere das Roh-MDI, welches bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® M 20 oder Lupranat® M 50 vertrieben.

In einer besonders bevorzugten Ausführungsform werden als Di- oder Polyisocyanatverbindung I hydrophil modifiziertes MDI oder emulgiertes polymeres MDI eingesetzt. Dabei handelt es sich beim hydrophil modifizierten MDI um

Umsetzungsprodukte des MDI, bei denen ein kleiner Anteil der Isocyanatgruppen mit hydrophilen Verbindungen, welche wenigstens eine isocyanatreaktive Gruppe aufweisen, beispielsweise einem Methoxyplyethylenglykol, umgesetzt wurden. Entsprechende Produkte, wie beispielsweise die Suprasec®- oder Rubinate®-MDI-Produktreihe von Huntsman Polyurethanes, sind im Markt verfügbar (siehe hierzu beispielsweise M. Broekaert, New emulsifiable MDI-variants for sealers and primers on dry and wet concrete, 2004, online verfügbar unter http://www.huntsman.com/polyurethanes/ Media%20Library/a_MC1CD1 F5AB7BB1738 E040EBCD2B6B01 F1/Products_MC1CD1 F5AB8081738E040EBCD2B6B01 F1/Adhesi ves_former_MC1CD1F5B06E31738E040EBCD2B6B01F1/Technical% 20presentati_M C1CD1F5B098A1738E040EBCD2B6B01F1/files/marc_broekaert_berlin_2004.pdf).

Dagegen handelt es sich beim emulgierten polymeren MDI um polymeres MDI, welches in Tröfpchenform in Wasser emulgiert ist. Um dabei die Abreaktion der Isocyanatgruppen mit Wasser zu unterbinden, sind die Tröpfchen des polymeren MDI mit einer dünnen Schicht aus Polyharnstoff umhüllt (siehe hierzu beispielsweise A.N.Papadopoulos, C.A.S. Hill, E. Traboulay, J.R.B. Hague, Isocyanate Resins for Particleboard: PMDI vs EMDI, 2002, online verfügbar unter http://www.fidelityco.net/pdf/emdi-pmdi.pdf oder R. Tan, Wood 493, 2012, online verfügbar unter https://pdfs.semantic scholar.org/eeda/43ac33b168e324473de1 e74b74aff4e85b13.pdf). Entsprechende Produkte sind auf dem Markt verfügbar, beispielsweise Lupramat® MP 100/1 der Firma BASF Polyurethane GmbH (Gehalt an emulgiertem polymerem MDI: 40 Gew.-%).

Bei der Herstellung des Polymer/Faser-Komposits werden vorteilhaft ≥ 0,1 und ≤ 10 Gew.-% und mit besonderem Vorteil ≥ 0,5 und ≤ 8 Gew.-% und vorteilhaft ≥ 2 und ≤ 6 Gew.-% an Di- oder Polyisocyanatverbindung I, bezogen auf die Menge an faserförmigen Substrat eingesetzt.

Nach dem erfindungsgemäßen Verfahren sind insbesondere thermoverformbare Polymer/Faser-Komposite zugänglich, deren Flächengewicht ≥ 500 und ≤ 30000 $g/m^2$, insbesondere vorteilhaft ≥ 1000 und ≤ 20000 $g/m^2$ und mit Vorteil ≥ 1000 und ≤ 10000 $g/m^2$ aufweisen. Dabei sind die nach dem erfindungsgemäßen Verfahren erhältlichen thermoverformbaren Polymer/Faser-Komposite in einer bevorzugten Ausführungsform flächenförmig eben während sie in einer weiteren bevorzugten Ausführungsform eine nicht-flächenförmige dreidimensionale Struktur aufweisen.

Erfindungsgemäß umfasst sind demnach auch die thermoverformbaren Polymer/Faser-Komposite, wie sie nach dem erfindungsgemäßen Verfahren erhältlich sind.

In entsprechender Weise ist auch die Verwendung eines erfindungsgemäßen thermoverformbaren Polymer/-Faser-Komposits zur Herstellung eines Polymer/Faser-Formteils erfindungsgemäß umfasst, welches sich in seiner Form vom eingesetzten thermoverformbaren Polymer/Faser-Komposit unterscheidet.

Dementsprechend ist erfindungsgemäß auch ein Verfahren zur Herstellung eines Polymer/Faser-Formteils umfasst, welches dadurch gekennzeichnet ist, dass ein erfindungsgemäßes thermoverformbares Polymer/Faser-Komposit auf eine Temperatur ≥ Tg aufgeheizt wird, das so erhaltene Polymer/Faser-Komposit bei einer Temperatur ≥ Tg in die gewünschte Form des Polymer/Faser-Formteils gebracht wird und danach das erhaltene Polymer/Faser-Formteil unter Beibehaltung seiner Form auf eine Temperatur < Tg abgekühlt wird.

Erfindungsgemäß erfolgt das Aufheizen des Polymer/Faser-Komposits auf eine Temperartur, welche wenigstens der Glasübergangstemperatur Tg des Polymeren P entspricht. Mit Vorteil wird das Polymer/Faser-Komposit auf eine Temperatur Tg + ≥ 10 °C und mit besonderem Vorteil Tg + ≥ 30 °C aufgeheizt.

Von Bedeutung ist ferner, dass die Herstellung des Polymer/Faser-Formteils in einer Ausführungsform mittels einer beheizten Formpresse erfolgt, deren Kontaktfläche eine Temperatur ≥ Tg sowie ggf. eine definierte Oberflächenstruktur (d.h. einem aus der Kontaktfläche herausragenden und/oder hineinragenden Muster) aufweist und deren Form der negativen Form des Polymer/Faser-Formteils entspricht und dessen Abkühlung außerhalb der Formpresse erfolgt. Aufheizvorgang und Verformungsvorgang erfolgen in dieser Ausführungsform in der beheizten Formpresse. Selbstverständlich ist es erfindungsgemäß auch möglich, dass das Polymer/Faser-Komposit außerhalb der Formpresse auf eine Temperatur ≥ Tg aufgeheizt und anschließend in der Formpresse ohne weitere Heizung zu den Polymer/Faser-Formteil verformt und dabei auf eine Temperatur < Tg abgekühlt wird. In dieser Ausführungsform erfolgt der Aufheiz- und der Verformungs-/Abkühlvorgang separat.

In einer bevorzugten Ausführungsform erfolgt der Aufheizvorgang des Polymer/Faser-Komposits mittels Durchleiten zwischen zwei achsenparallel angeordneten und in Durchleitrichtung rotierenden Metallwalzen, wobei

a) wenigstens eine der Metallwalzen eine definierte Oberflächenstruktur der Kontaktfläche zum Polymer/Faser-Komposit sowie eine Temperatur ≥ Tg aufweist,
b) der Spalt zwischen den Kontaktflächen der beiden Metallwalzen kleiner als die Dicke des Polymer/Faser-Komposits ist, und
c) das Durchleiten des Polymer/Faser-Komposits zwischen den Kontaktflächen der beiden Metallwalzen mit der Geschwindigkeit erfolgt, welche der Rotationsgeschwindigkeit der Kontaktflächen der beiden Metallwalzen entspricht.

Dabei ist es für den Fachmann selbsterläuternd, dass die definierte Oberflächenstruktur der Kontaktfläche der

wenigstens einen Metallwalze dem Negativ der auf dem aufgeheizten Polymer/Faser-Komposit und letztlich auch auf dem Polymer/Faser-Formteil ausgebildeten Oberflächenstruktur darstellt. Auch ist es selbsterläuternd, dass die Differenz zwischen der Dicke des Polymer/Faser-Komposits und dem Spalt zwischen den Kontaktflächen der beiden Metallwalzen der maximalen Tiefe der auf dem Polymer/Faser-Komposit ausgebildeten positiven Oberflächenstruktur entspricht. In der vorliegenden Ausführungsform entspricht die Spaltbreite vorteilhaft der Dicke des Polymer/Faser-Komposits multipliziert mit einem Faktor ≤ 0,98, besonders vorteilhaft mit einem Faktor ≤ 0,6 und insbesondere vorteilhaft mit einem Faktor ≤ 0,25. Damit sich die positiven Oberflächenstrukturen auf dem Polymer/Faser-Komposit optimal ausbilden können ist es zwingend, dass das Durchleiten des Polymer/Faser-Komposits zwischen den Kontaktflächen der beiden Metallwalzen mit der Geschwindigkeit (in m/sec) erfolgt, welche der Rotationsgeschwindigkeit der Kontaktflächen (in m/sec) der beiden Metallwalzen entspricht.

Die Dicke des Polymer/Faser-Komposits vor dem Aufheizvorgang liegt in der Regel im Bereich ≥ 1 mm und ≤ 10 cm, häufig im Bereich ≥ 1 mm und ≤ 3 cm und oft im Bereich ≥ 1 mm und ≤ 1 cm.

In einer weiteren vorteilhaften Ausführungsform erfolgt das erfindungsgemäße Verfahren dergestalt, dass vor oder nach dem Aufheizvorgang aber vor dem Verformungsschritt noch ein Verfahrenszwischenschritt durchgeführt wird, in welchem auf die eine und/oder die andere Oberfläche des Polymer/Faser-Komposits ein flächenförmiges Dekormaterial mit einer Dicke ≤ 10 mm aufgebracht wird.

Beim dem erfindungsgemäß einsetzbaren Dekormaterial handelt es sich vorteilhaft um ein textiles Flächengebilde, wie beispielsweise ein Vliesstoff, ein Gewebe oder ein Gewirke aus natürlichen oder synthetischen Fasern, eine Kunststofffolie, wie beispielsweise eine thermoplastische Polyvinylchlorid-, Polyolefin- oder Polyesterfolie, ein geschäumtes Flächengebilde, wie beispielsweise ein Flächengebilde aus einem Polyolefin- oder einem Polyurethanschaum, ein geschäumtes Flächengebilde, welches seinerseits auf der nicht mit dem aufgeheizten Polymer/Faser-Komposit in Kontakt kommenden Oberfläche mit einem textilen Flächengebilde, einer Kunststofffolie oder einem weiteren geschäumten Flächengebilde beschichtet (kaschiert) ist oder um ein Holzfurnier.

Das flächenförmige Dekormaterial weist in der Regel eine Dicke ≤ 10 mm auf. Handelt es sich bei dem flächenförmigen Dekormaterial um ein textiles Flächengebilde oder eine Kunststofffolie, so beträgt deren Dicke in der Regel ≤ 3 mm, häufig vorteilhaft ≤ 2 mm und häufig insbesondere vorteilhaft ≤ 1 mm. Handelt es sich jedoch bei dem flächenförmigen Dekormaterial um ein geschäumtes Flächengebilde oder ein beschichtetes (kaschiertes) geschäumtes Flächengebilde, so beträgt deren Dicke häufig ≤ 8 mm, oft ≤ 5 mm und besonders oft ≤ 3 mm. Handelt es sich bei dem flächenförmigen Dekormaterial jedoch um ein Holzfurnier, so beträgt dessen Dicke in der Regel ≤ 3 mm, häufig vorteilhaft ≤ 2 mm und häufig insbesondere vorteilhaft ≤ 1 mm.

Erfindungsgemäß sind daher auch die nach vorgenanntem Verfahren zugänglichen Polymer/Faser-Formteile umfasst.

Erfindungsgemäß ist ferner von Bedeutung, dass sowohl das Verfahren zur Herstellung des thermoverformbaren Polymer/Faser-Komposits, wie auch das Verfahren zur Herstellung des Polymer/Faser-Formteils kontinuierlich oder diskontinuierlich erfolgen können.

Die erfindungsgemäß zugänglichen Polymer/Faser-Formteile weisen eine gute Thermodimensionsstabilität sowie eine verbesserte Wasserbeständigkeit auf und eigenen sich daher vorteilhaft als Bauelement im Fahrzeugbau, wie beispielsweise als Türinsert, Türdekorträger, Kniefänger, Handschuhfach, Hutablage, Sonnenblende, Mittelkonsole, Kofferraumverkleidung oder Sitzrückenverkleidung, in Bauwerken, beispielsweise als Fußbodenbelag, insbesondere Klick-Laminat, Raumteiler, Trennwand, Deckenplatte oder Wanddekorteil und in Möbeln als Möbelformteil, wie beispielsweise als Sitz- oder Rückenfläche, wobei die Verwendung als Fußbodenbelag, Möbelformteil oder Wanddekorteil besonders bevorzugt sind.

Die Erfindung soll durch nachfolgende nichteinschränkende Beispiele erläutert werden.

## Beispiele

### Herstellung einer wässrigen Polymer P1-Dispersion (Dispersion 1)

In einem 500 l-Technikumsreaktor, ausgerüstet mit einem Rührer, einem Rückflusskühler und Dosiereinrichtungen wurden bei 20 bis 25 °C (Raumtemperatur) und unter Stickstoffatmosphäre 36,5 kg entionisiertes Wasser vorgelegt und bei Atmosphärendruck (1,013 bar absolut) unter Rühren auf 95 °C aufgeheizt. Nach Erreichen dieser Temperatur wurden innerhalb von 10 Minuten 14,0 kg einer 7 gew.-%igen wässrigen Lösung von Natriumpersulfat kontinuierlich unter Rühren zudosiert. Anschließend wurden, jeweils gleichzeitig beginnend, eine Mischung aus 61,6 kg Acrylsäure, 3,2 kg Methylmethacrylat und 40,5 kg entionisiertem Wasser innerhalb von 70 Minuten, sowie eine Mischung aus 14,0 kg einer 40 gew.-%igen wässrigen Lösung Natriumhydrogensulfit und 1,4 kg entionisiertem Wasser ebenfalls innerhalb von 70 Minuten und 32,5 kg einer 7 gew.-%igen wässrigen Lösung von Natriumpersulfat innerhalb von 75 Minuten kontinuierlich mit gleichbleibenden Mengenströmen unter Rühren und unter Aufrechterhaltung der vorgenannten Temperatur dem Reaktionsgefäß zudosiert. Anschließend wurde das Polymerisationsgemisch weitere 5 Minuten gerührt und dann auf 93

°C abgekühlt. Danach wurden unter Rühren innerhalb von 10 Minuten 13,9 kg 25 gew.-%ige Natronlauge zudosiert und damit ein pH-Wert von 3,3 eingestellt, gefolgt von weiteren 5 Minuten Rühren. Anschließend wurde Zulauf 1 innerhalb von 170 Minuten zudosiert, wobei zuerst 48 Gew.-% von Zulauf 1 innerhalb von 20 Minuten und dann 52 Gew.-% von Zulauf 1 innerhalb von 150 Minuten zugegeben wurden - jeweils kontinuierlich mit gleichbleibendem Mengenströmen. Zulauf 1 bestand aus 21,8 kg einer 7 gew.-%igen wässrigen Lösung aus Natriumpersulfat. 5 Minuten nach Start von Zulauf 1 wurde Zulauf 2 innerhalb von 150 Minuten kontinuierlich mit gleichbleibendem Mengenstrom unter Beibehaltung der vorgenannten Polymerisationstemperatur zudosiert. Zulauf 2 bestand aus einer homogenen Emulsion, hergestellt aus 28,4 kg entionisiertem Wasser, 3,86 kg einer 28 gew.-%igen wässrigen Lösung von Natriumlaurylethersulfat (Disponil® FES 27; Produkt der Fa. BASF SE), 2,88 kg einer 15 gew.-%igen wässrigen Lösung von Natriumdodecylsulfat (Disponil® SDS 15; Produkt der Fa. BASF SE), 4,54 kg Glycidylmethacrylat, 1,06 kg 1,4-Butandioldiacrylat, 57,00 g Methylmethacrylat, 86,48 kg Styrol und 2,12 kg Acrylsäure. Nach beendeter Zugabe von Zulauf 1 wurde noch 10 Minuten weiter gerührt. Anschließend wurden 108 g eines Entschäumers (TEGO® Foamex 822; Produkt der Fa. Evonik Resource Efficiency GmbH) zugegeben. Danach wurde das Polymerisationsgemisch auf 90 °C abgekühlt und die Zuläufe 3 und 4 gleichzeitig beginnend kontinuierlich mit gleichbleibenden Mengenströmen innerhalb von 30 Minuten zugegeben. Zulauf 3 bestand aus 650 g einer 10 gew.-%igen wässrigen Lösung von tert.-Butylhydroperoxid und Zulauf 4 bestand aus 820 g einer 13,1 gew.-%igen wässrigen Lösung von Acetonbisulfit (molares 1:1-Additionsprodukt aus Aceton und Natriumhydrogensulfit). Danach wurde das erhaltene Polymerisationsgemisch auf Raumtemperatur abgekühlt und über einen 125 μm-Filter filtriert. Die erhaltene wässrige Polymerisatdispersion wies einen Feststoffgehalt von 53,5 Gew.-% auf. Die zahlenmittlere Teilchengröße wurde zu 347 nm und die Glasübergangstemperatur zu 103 °C bestimmt.

Der Feststoffgehalt wurde generell mit einem Feuchtebestimmer der Firma Mettler Toledo durch Trockung von 0,5 bis 1 g einer erhaltenen Polymerisatdispersion oder Polymerisatlösung bei 140 °C bis zur Gewichtskonstanz bestimmt.

Die Glasübergangstemperatur wurde generell mit Hilfe eines Differentialkalorimeters Q 2000 der Firma TA Instruments bestimmt. Die Heizrate betrug 10 K pro Minute.

Die zahlenmittlere Teilchengröße der Dispersionsteilchen wurde generell durch dynamische Lichtstreuung an einer 0,005 bis 0,01 gew.-%igen wässrigen Dispersion bei 23 °C mittels des Autosizers IIC der Firma Malvern Instruments, England, ermittelt. Angegeben wird der mittlere Durchmesser der Kumulantenauswertung (cumulant z-average) der gemessenen Autokorrelationsfunktion (ISO-Norm 13321).

Die pH-Werte wurden generell durch Messung einer Probe mit einer pH-Elektrode der Firma Schott bei Raumtemperatur bestimmt.

Anwendungstechnische Untersuchungen

Die Versuche wurden mit einem 12 Zoll-Refiner der Firma Antriz und einer damit verbundenen Blowline durchgeführt. Dabei wurde der Refiner bei 160 bis 170 °C und einem Innendruck von 5 bis 6 bar (Überdruck) betrieben. Der Abstand zwischen den beiden Mahlplatten betrug 0,3 mm, wobei eine der Mahlplatten mit 3000 Umdrehungen pro Minute betrieben wurde. Die mit dem Refiner über einen Flunsch verbundene Blowline (Stahlrohr) wies einen Innendurchmesser von 3 cm und eine Rohrlänge von 30 m auf. Über eine 0,2 mm Düse, die sich in einem Abstand von 50 cm vom Refinerausgang / Blowlineeingang in der Blowline befand, wurde dann die wässrige Polymerdispersion P mit 2 bar (Überdruck) und über eine 0,2 mm Düse, die sich in einem Abstand von 80 cm vom Refinerausgang / Blowlineeingang in der Blowline befand das Di-oder Polyisocyanat I ebenfalls mit 2 bar Überdruck eingedüst. Am Ende der Blowline befand sich ein Zyklonabscheider, über den die beschichteten Holzfasern weiter getrocknet und auf eine Temperatur von ca. 80 °C abgekühlt und in einen offenen Behälter abgeschieden wurden.

Für die Untersuchungen wurden mit 160 bis 170 °C heißem Wasser/Dampf bei 5 bis 6 bar (Überdruck) in einem sogenannten Kocher vorbehandelte Fichte-Hackschnitzel eingesetzt, wobei der Massenstrom an Holzschnitzel in den Refiner (bzw. Holzfasern in die Blowline) auf 30 kg pro Stunde eingestellt wurde.

Als Bindemittel wurden die Dispersion 1 und die Isocyanate Lupramat® M 20 R (PMDI), Produkt der Firma BASF Polyurethane GmbH, Lupramat® MI (MDI), Produkt der Firma BASF Polyurethane GmbH und Lupramat® MP 100/1, eine 40 gew.-%ige wässrige PMDI-Dispersion (E-PMDI), Produkt der Firma BASF Polyurethane GmbH alleine sowie die Dispersion 1 in Kombination mit den genannten Di- und Polyisocyanaten eingesetzt. Dabei wurden die Bindemittel mittels einer Exzenterschneckenpumpe mit einem Druck von 2 bar (Überdruck) über die 0,2 mm Düse(n) in die Blowline eingedüst, wobei die Massenströme auf die jeweilige notwendige Menge Bindemittel (als Feststoff gerechnet) pro Stunde einjustiert wurden. Für jedes Bindemittel bzw. die Bindemittelkombination erfolgte ein Versuch über 2 Stunden im kontinuierlich stationären Zustand, wobei während dieser Zeit auch die mit dem jeweiligen Bindemittel besprühten Holzfasern in einem offenen Behälter gesammelt wurden. So wurden die in Tabelle 1 beschriebenen Faser/Bindemittel-Kombinationen hergestellt, wobei es sich bei den angegebenen Mengen um Gewichtsteile handelt. Dabei ist zu beachten, dass sich die Mengenangaben von Dispersion 1 und E-PMDI auf die jeweiligen Feststoffgehalte beziehen.

Tabelle 1: Hergestellte Faser/Bindemittel-Kombinationen (in Gew.-Teilen)

| Type | Holzfasern | Dispersion 1 | PMDI | MDI | E-PMDI |
|---|---|---|---|---|---|
| VD1 | 100 | 10 | - | - | - |
| VP1 | 100 | - | 5 | - | - |
| VM1 | 100 | - | - | 5 | - |
| VE1 | 100 | - | - | - | 5 |
| EP1 | 100 | 5 | 5 | - | - |
| EM1 | 100 | 5 | - | 5 | - |
| EE1 | 100 | 5 | - | - | 5 |

Untersuchung der mechanischen Eigenschaften

Mit den aus der Blowline gemäß der vorgenannten Versuchsdurchführung erhaltenen beschichteten Fasern wurden 51x51cm-Faserplatten mit einer Dicke von 4,5 mm und einer Dichte von 0,8 g/cm$^3$ hergestellt. Hierzu wurden 936 g der erhaltenen Fasern gleichmäßig in einen waagrecht stehenden Holzrahmen mit den Innenmaßen 51x51x30 cm (L/B/H) eingestreut. Daran anschließend wurde auf den im Holzrahmen befindlichen Faserflor waagrecht eine 51x51 cm-Holzplatte gelegt und dieser mit einem mittigen Stempel auf eine Höhe von 10 cm vorverdichtet. Der so erhaltene Faserkuchen wurde anschließend aus dem Holzrahmen genommen, auf beiden quadratischen Flächen mit einem Trennpapier abgedeckt und zwischen zwei 10 mm dicken waagrechten Trennblechen bei 200 °C unter Druck mit einer Pressrate von 10 Sekunden pro Millimeter auf eine Dicke von 4,5 mm verdichtet, wobei jeweils die untere Seite des Faserkuchens auf die untere waagrechte Trennplatte gelegt wurde. Daran anschließend ließ man die erhaltenen Faserplatten außerhalb der Druckpresse auf Raumtemperatur abkühlen.

Die so erhaltenen Faserplatten werden abhängig vom verwendeten Bindemittel FVD1 (Faserplatte mit Dispersion 1), FVP1 (Faserplatte mit PMDI), FVM1 (Faserplatte mit MDI), FVE1 (Faserplatte mit E-PMDI), FEP1 (Faserplatte mit Dispersion 1 und PMDI), FEM1 (Faserplatte mit Dispersion 1 und MDI) sowie FEE1 (Faserplatte mit Dispersion 1 und E-PMDI), genannt.

Die vorgenannten Faserplatten wurden einer zweiten Verdichtung auf eine Dichte von 0,9 g/m$^3$ unterzogen, wobei die Faserplatten zuerst für eine Woche im Klimaraum bei 23 °C und 50 % relativer Luftfeuchtigkeit gelagert wurden. Daran anschließend wurden die Faserplatten in einer Heizpresse bei 160°C auf eine Dicke von 4,0 mm, entsprechend einer Dichte von 0,9 g/cm$^3$ verpresst, wobei in der Kontaktpresse unter Zuhilfenahme eines Prägebleches jeweils eine scharfkantige Gravur mit einer Tiefe von 0,1 bis 1,0 mm innerhalb von 60 Sekunden eingeprägt wurde.

Von den nach dieser Nachverdichtung erhaltenen Faserplatten wurde die Wasseraufnahme und Dickenquellung bestimmt sowie das Prägebild visuell beurteilt.

Dabei erfolgte die Bestimmung der Wasseraufnahme und der Dickenquellung dergestalt, dass von den Faserplatten entsprechende 5 x 5 cm-Prüfkörper ausgestanzt und diese dann genau gewogen und deren Dicken exakt bestimmt wurden. Daran anschließend wurden diese Prüfkörper für 24 Stunden senkrecht in 23 °C aufweisenden entionisiertem Wasser gelagert, daran anschließend mit einem Baumwolltuch trocken getupft und dann gewogen bzw. die Dicke der einzelnen Prüfkörper bestimmt. Dabei bestimmte man die Wasseraufnahme (in Gew.-%) aus der Gewichtsdifferenz der Prüfkörper nach und vor der Wasserlagerung multipliziert mit 100, dividiert durch das jeweilige Gewicht vor der Wasserlagerung. In entsprechender Weise wurde auch die Dickenquellung aus der Differenz der Dicke der Prüfkörper nach und vor der Wasserlagerung multipliziert mit 100, dividiert durch die Dicke der Prüfkörper vor der Wasserlagerung bestimmt. Von jeder Faserplatte wurden 5 Prüfköper hergestellt und zu den Prüfungen herangezogen. Die nachfolgend angegebenen Prüfwerte stellen dabei die Mittelwerte dieser 5 Messungen dar. Dabei ist die Wasserbeständigkeit umso besser zu bewerten, je niedriger die Wasseraufnahme und je niedriger die Dickenquellung ist. Die dabei für die jeweiligen Prüfkörper erhaltenen Ergebnisse sind in Tabelle 2 aufgelistet.

Die Beurteilung der Prägbarkeit erfolgte dergestalt, dass die Kanten der Prägung der jeweiligen Prüfkörper nach der Wasserlagerung visuell mittels einer Lupe (mit 12-facher Vergrößerung) beurteilt wurden. Dabei wurde die Prägbarkeit als gut (+) bewertet, wenn die Kanten der Prägungen nach der Wasserlagerung keinerlei sichtbaren abstehenden bzw. lose Fasern [= Rauigkeit] aufwiesen. Wiesen die Kanten der Prägungen nach der Wasserlagerung dagegen sichtbare abstehende bzw. lose Fasern auf, so wurde die Prägbarkeit als unzureichend (-) bewertet. Die angegebenen Bewertungen erfolgten, wenn wenigstens 4 der 5 Prüfkörper den genannten Kriterien entsprachen. Die entsprechenden Ergebnisse sind ebenfalls in Tabelle 2 aufgelistet.

Tabelle 2: Ergebnisse der jeweiligen Prüfkörper nach der Wasserlagerung

| Prüfkörper | Wasseraufnahme [in Gew.-%] | Dickenquellung [in %] | Prägbarkeit |
|---|---|---|---|
| FVD1 | 73 | 33 | + |
| FVP1 | 23 | 12 | - |
| FVM1 | 24 | 13 | - |
| FVE1 | 27 | 14 | - |
| FEP1 | 28 | 13 | + |
| FEM1 | 26 | 14 | + |
| FEE1 | 26 | 14 | + |

Aus den Ergebnissen ist klar ersichtlich, dass die alleine mit der Dispersion 1 verfestigten Prüfkörper zwar eine gute Prägbarkeit aber eine hohe Wasseraufnahme und eine hohe Dickenquellung aufwiesen, während die alleine mit einem Di- oder Polyisocyanat verfestigten Prüfkörper zwar eine niedrige Wasseraufnahme und eine niedrige Dickenquellung aber eine unzureichende Prägbarkeit aufwiesen. Demgegenüber wiesen die sowohl mit der Dispersion 1 als auch mit einem Di- oder Polyisocyanat verfestigten Prüfkörper sowohl eine gute Prägbarkeit als auch eine niedrige Wasseraufnahme sowie eine niedrige Dickenquellung auf.

## Patentansprüche

1. Verfahren zur Herstellung eines thermoverformbaren Polymer/Faser-Komposits unter Verwendung eines faserförmigen Substrats, einer organischen Di- oder Polyisocyanatverbindung I und eines Polymers P, wobei

    • das faserförmige Substrat in einen Gasstrom eingebracht wird, danach
    • das faserförmige Substrat im Gasstrom mit einer wässrigen Dispersion eines Polymers P mit einer Glasübergangstemperatur Tg und einer organischen Di-oder Polyisocyanatverbindung I in Kontakt gebracht wird, danach
    • das mit der wässrigen Dispersion des Polymers P und der organischen Di-oder Polyisocyanatverbindung I in Kontakt gebrachte faserförmige Substrat im Gasstrom getrocknet und anschließend abgeschieden wird, danach
    • das erhaltene abgeschiedene faserförmige Substrat in einen Faserflor überführt wird, und danach
    • der erhaltene Faserflor bei einer Temperatur ≥ Tg zu einem thermoverformbaren Polymer/Faser-Komposit verdichtet wird,

    und wobei die wässrige Dispersion des Polymers P durch radikalische initiierte Emulsionspolymerisation eines Gemisches von ethylenisch ungesättigten Monomeren P [Monomere P] in einem wässrigen Medium in Gegenwart eines Polymers A erfolgt, wobei das Polymer A aus

    a) 80 bis 100 Gew.-% wenigstens einer ethylenisch ungesättigten Mono- und/oder Dicarbonsäure, Monomere A1 genannt, und
    b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

    und wobei die Monomeren P in Art und Menge so gewählt werden, dass das erhaltene Polymer P eine Glasübergangstemperatur Tg ≥ 20 °C gemessen nach DIN EN ISO 11357-2 (2013-09) aufweist und wobei unter einem faserförmigen Substrat solche Partikel verstanden werden, deren Verhältnis von ihrer längsten Ausdehnung zu ihrer kürzesten Ausdehnung wenigstens ≥ 5 beträgt.

2. Verfahren nach Anspruch 1, **dadurch gekennzeichnet, dass** das Gewichstsverhältnis von Polymer P zu Polymer A ≥ 1 und ≤ 10 ist.

3. Verfahren nach Anspruch 1 oder 2, **dadurch gekennzeichnet, dass** das Polymer A ein zahlenmittleres Molekulargewicht ≥ 1000 und ≤ 30000 g/mol aufweist.

4. Verfahren nach einem der Ansprüche 1 bis 3, **dadurch gekennzeichnet, dass** zur Herstellung des Polymeren P

    ≥ 90 und ≤ 99,9 Gew.-% Styrol und/oder Methylmethacrylat,

(fortgesetzt)

| | |
|---|---|
| ≥ 0 und ≤ 9,9 Gew.-% | n-Butylacrylat und/oder 2-Ethylhexylacrylat, und |
| ≥ 0,1 und ≤ 10,0 Gew.-% | Acrylsäure, Methacrylsäure, Glycidylacrylat, Glycidylmethacrylat, 2-Hydroxyethyl-, 2-Hydroxypropyl- und 3-Hydroxypropyl-, 2-Aminoethyl-, 2-Aminopropyl- und 3-Aminopropylacrylat und -methacrylat, 1,4-Butylenglykoldiacrylat und -methacrylat, 1,2-, 1,3- und 1,4-Divinylbenzol, Allylacrylat und/oder Allylmethacrylat |

eingesetzt werden, wobei sich die Mengen zu 100 Gew.-% aufsummieren.

**5.** Verfahren nach einem der Ansprüche 1 bis 4, **dadurch gekennzeichnet, dass** es sich bei der organischen Di- oder Polyisocyanatverbindung I um eine aromatische Di- oder Polyisocyanatverbindung handelt.

**6.** Verfahren nach einem der Ansprüche 1 bis 5, **dadurch gekennzeichnet, dass** es sich bei der organischen Di- oder Polyisocyanatverbindung I um 2,2'-Diphenylmethandiisocyanat (2,2'-MDI), 2,4'-Diphenylmethandiisocyanat (2,4'-MDI), 4,4'-Diphenylmethandiisocyanat (4,4'-MDI) und/oder oligomeres Diphenylmethandiisocyanat handelt.

**7.** Verfahren nach einem der Ansprüche 1 bis 6, **dadurch gekennzeichnet, dass** als faserförmiges Substrat eine Naturfaser eingesetzt wird.

**8.** Verfahren nach einem der Ansprüche 1 bis 7, **dadurch gekennzeichnet, dass** das faserförmige Substrat in Gasströmungsrichtung zuerst mit der wässrigen Dispersion des Polymeren P und erst danach mit der organischen Di- oder Polyisocyanatverbindung I in Kontakt gebracht wird.

**9.** Verfahren nach einem der Ansprüche 1 bis 8, **dadurch gekennzeichnet, dass** die Menge an Polymer P 0,1 bis 15 Gew.-% und die Menge an organischer Di- oder Polyisocyanatverbindung I 0,1 bis 10 Gew.-%, jeweils bezogen auf die Menge des faserförmigen Substrats, beträgt.

**10.** Verfahren nach einem der Ansprüche 1 bis 9, **dadurch gekennzeichnet, dass** das erhaltene thermoverformbare Polymer/Faser-Komposit flächenförmig ist und ein Flächengewicht ≥ 500 und ≤ 30000 $g/m^2$ aufweist.

**11.** Thermoverformbares Polymer/Faser-Komposit erhältlich nach einem Verfahren gemäß einem der Ansprüche 1 bis 10.

**12.** Verwendung eines thermoverformbaren Polymer/Faser-Komposits gemäß Anspruch 11 zur Herstellung eines Polymer/Faser-Formteils, welches sich in seiner Form vom eingesetzten thermoverformbaren Polymer/Faser-Komposit unterscheidet.

**13.** Verfahren zur Herstellung eines Polymer/Faser-Formteils, **dadurch gekennzeichnet, dass** ein thermoverformbares Polymer/Faser-Komposit gemäß Anspruch 11 auf eine Temperatur ≥ Tg aufgeheizt wird, das so erhaltene Polymer/-Faser-Komposit bei einer Temperatur ≥ Tg in die gewünschte Form des Polymer/Faser-Formteils gebracht wird und danach das erhaltene Polymer/Faser-Formteil unter Beibehaltung seiner Form auf eine Temperatur < Tg abgekühlt wird.

**14.** Verfahren zur Herstellung eines Polymer/Faser-Formteils gemäß Anspruch 13, **dadurch gekennzeichnet, dass** der Aufheizvorgang des Polymer/Faser-Komposits mittels Durchleiten zwischen zwei achsenparallel angeordneten und in Durchleitrichtung rotierenden Metallwalzen erfolgt, wobei

a) wenigstens eine der Metallwalzen eine definierte Oberflächenstruktur der Kontaktfläche zum Polymer/Faser-Komposit sowie eine Temperatur ≥ Tg aufweist,
b) der Spalt zwischen den Kontaktflächen der beiden Metallwalzen kleiner als die Dicke des Polymer/Faser-Komposits ist, und
c) das Durchleiten des Polymer/Faser-Komposits zwischen den Kontaktflächen der beiden Metallwalzen mit der Geschwindigkeit erfolgt, welche der Rotationsgeschwindigkeit der Kontaktflächen der beiden Metallwalzen entspricht.

**15.** Verfahren nach Anspruch 13 oder 14, **dadurch gekennzeichnet, dass** vor oder nach dem Aufheizschritt ein flächenförmiges Dekormaterial auf das Polymer/Faser-Komposit aufgebracht wird.

**16.** Polymer/Faser-Formteil erhältlich nach einem Verfahren gemäß einem der Ansprüche 13 bis 15.

**17.** Verwendung eines Polymer/Faser-Formteils gemäß Anspruch 16 als Fußbodenbelag, Möbelformteil oder Wanddekorteil.

## Claims

**1.** A process for producing a thermoformable polymer/fiber composite using a fibrous substrate, an organic di- or polyisocyanate compound I and a polymer P, wherein

- the fibrous substrate is introduced into a gas stream, then
- the fibrous substrate in the gas stream is contacted with an aqueous dispersion of a polymer P having a glass transition temperature Tg and an organic di- or polyisocyanate compound I, then
- the fibrous substrate that has been contacted with the aqueous dispersion of the polymer P and the organic di- or polyisocyanate compound I is dried in the gas stream and then deposited, then
- the deposited fibrous substrate obtained is converted to a fiber web, and then
- the fiber web obtained is consolidated at a temperature ≥ Tg to give a thermoformable polymer/fiber composite,

and wherein the aqueous dispersion of the polymer P is effected by free-radically initiated emulsion polymerization of a mixture of ethylenically unsaturated monomers P [monomers P] in an aqueous medium in the presence of a polymer A, wherein the polymer A is formed from

a) 80% to 100% by weight of at least one ethylenically unsaturated mono- and/or dicarboxylic acid, called monomers A1, and
b) 0% to 20% by weight of at least one further ethylenically unsaturated monomer which differs from the monomers A1 [monomers A2], in copolymerized form,

and wherein the monomers P are chosen in terms of type and amount such that the polymer P obtained has a glass transition temperature Tg ≥ 20°C measured according to DIN EN ISO 11357-2 (2013-09), and wherein a fibrous substrate means those particles having a ratio of their longest dimension to their shortest dimension of at least ≥ 5.

**2.** The process according to claim 1, wherein the weight ratio of polymer P to polymer A is ≥ 1 and ≤ 10.

**3.** The process according to claim 1 or 2, wherein the polymer A has a number-average molecular weight of ≥ 1000 and ≤ 30 000 g/mol.

**4.** The process according to any of claims 1 to 3, wherein the polymer P is prepared using

≥ 90% and ≤ 99.9% by weight of styrene and/or methyl methacrylate,
≥ 0% and ≤ 9.9% by weight of n-butyl acrylate and/or 2-ethylhexyl acrylate, and
≥ 0.1% and ≤ 10.0% by weight of acrylic acid, methacrylic acid, glycidyl acrylate, glycidyl methacrylate, 2-hydroxyethyl acrylate and methacrylate, 2-hydroxypropyl acrylate and methacrylate and 3-hydroxypropyl acrylate and methacrylate, 2-aminoethyl acrylate and methacrylate, 2-aminopropyl acrylate and methacrylate and 3-aminopropyl acrylate and methacrylate, butylene 1,4-glycol diacrylate and methacrylate, 1,2-, 1,3- and 1,4-divinylbenzene, allyl acrylate and/or allyl methacrylate,
where the amounts add up to 100% by weight.

**5.** The process according to any of claims 1 to 4, wherein the organic di- or polyisocyanate compound I is an aromatic di- or polyisocyanate compound.

**6.** The process according to any of claims 1 to 5, wherein the organic di- or polyisocyanate compound I is diphenylmethane 2,2'-diisocyanate (2,2'-MDI), diphenylmethane 2,4'-diisocyanate (2,4'-MDI), diphenylmethane 4,4'-diisocyanate (4,4'-MDI) and/or oligomeric diphenylmethane diisocyanate.

**7.** The process according to any of claims 1 to 6, wherein the fibrous substrate used is a natural fiber.

8. The process according to any of claims 1 to 7, wherein the fibrous substrate is contacted in gas flow direction first with the aqueous dispersion of the polymer P and only then with the organic di- or polyisocyanate compound I.

9. The process according to any of claims 1 to 8, wherein the amount of polymer P is 0.1% to 15% by weight and the amount of organic di- or polyisocyanate compound I is 0.1% to 10% by weight, based in each case on the amount of the fibrous substrate.

10. The process according to any of claims 1 to 9, wherein the resultant thermoformable polymer/fiber composite is two-dimensional and has a basis weight of ≥ 500 and ≤ 30 000 g/$m^2$.

11. A thermoformable polymer/fiber composite obtainable by a process according to any of claims 1 to 10.

12. The use of a thermoformable polymer/fiber composite according to claim 11 for production of a polymer/fiber molding which differs in shape from the thermoformable polymer/fiber composite used.

13. A process for producing a polymer/fiber molding, which comprises heating a thermoformable polymer/fiber composite according to claim 11 up to a temperature ≥ Tg, converting the polymer/fiber composite thus obtained at a temperature ≥ Tg to the desired shape of the polymer/fiber molding and then cooling the polymer/fiber molding obtained down to a temperature < Tg while retaining its shape.

14. The process for producing a polymer/fiber molding according to claim 13, wherein the operation of heating the polymer/fiber composite is effected by means of passage between two metal rolls in an axially parallel arrangement that rotate in the direction of passage, wherein

a) at least one of the metal rolls has a defined surface structure of the contact surface to the polymer/fiber composite and a temperature ≥ Tg,
b) the gap between the contact surfaces of the two metal rolls is less than the thickness of the polymer/fiber composite, and
c) the passage of the polymer/fiber composite between the contact surfaces of the two metal rolls is at the speed corresponding to the speed of rotation of the contact surfaces of the two metal rolls.

15. The process according to claim 13 or 14, wherein the heating step is preceded or followed by application of a two-dimensional decorative material to the polymer/fiber composite.

16. A polymer/fiber molding obtainable by a process according to any of claims 13 to 15.

17. The use of a polymer/fiber molding according to claim 16 as floor covering, furniture molding or wall decor part.

## Revendications

1. Procédé de fabrication d'un composite thermoformable de polymère/fibres à l'aide d'un substrat sous forme de fibres, d'un composé organique de diisocyanate ou de polyisocyanate I et d'un polymère P, dans lequel

• le substrat sous forme de fibres est introduit dans un flux gazeux, ensuite
• le substrat sous forme de fibres est mis en contact, dans le flux gazeux, avec une dispersion aqueuse d'un polymère P présentant une température de transition vitreuse Tg et avec un composé organique de diisocyanate ou de polyisocyanate I, ensuite
• le substrat sous forme de fibres mis en contact dans le flux gazeux avec la dispersion aqueuse du polymère P et avec le composé organique de diisocyanate ou de polyisocyanate I est séché et ensuite séparé, ensuite
• le substrat sous forme de fibres séparé obtenu est transformé en un voile de fibres et ensuite
• le voile de fibres obtenu est compacté à une température ≥ Tg en un composite thermoformable de polymère/fibres,

la dispersion aqueuse du polymère P ayant été obtenue par polymérisation en émulsion initiée par voie radicalaire d'un mélange de monomères éthyléniquement insaturés P [monomères P] dans un milieu aqueux en présence d'un polymère A, le polymère A étant formé, sous forme copolymérisée, à partir de

a) 80 à 100% en poids d'au moins un acide monocarboxylique et/ou dicarboxylique éthyléniquement insaturé, appelé monomère A1, et

b) 0 à 20% en poids d'au moins un autre monomère éthyléniquement insaturé qui se distingue des monomères A1 [monomère A2],

et les monomères P étant choisis, en ce qui concerne leur type et leur quantité, de telle sorte que le polymère P obtenu présente une température de transition vitreuse Tg ≥ 20°C, mesurée selon la norme DIN EN ISO 11357-2 (2013-09), et où on entend par substrat sous forme de fibres des particules dont le rapport de leur extension la plus longue à leur extension la plus courte est au moins ≥ 5.

2. Procédé selon la revendication 1, **caractérisé en ce que** le rapport pondéral de polymère P à polymère A est ≥ 1 et ≤ 10.

3. Procédé selon la revendication 1 ou 2, **caractérisé en ce que** le polymère A présente une masse moléculaire moyenne en nombre ≥ 1000 et ≤ 30.000 g/mole.

4. Procédé selon l'une des revendications 1 à 3, **caractérisé en ce que** pour la préparation du polymère P, on utilise

≥ 90 à ≤ 99,9% en poids de styrène et/ou de méthacrylate de méthyle,
≥ 0 et ≤ 9,9% en poids d'acrylate de n-butyle et/ou d'acrylate de 2-éthylhexyle et
≥ 0,1 et ≤ 10,0% en poidsd'acide acrylique, d'acide méthacrylique, d'acrylate de glycidyle, de méthacrylate de glycidyle, d'acrylate et de méthacrylate de 2-hydroxyéthyle, de 2-hydroxypropyle et de 3-hydroxypropyle, de 2-aminoéthyle, de 2-aminopropyle et de 3-aminopropyle, de diacrylate et de diméthacrylate de 1,4-butylèneglycol, de 1,2-divinylbenzène, de 1,3-divinylbenzène et de 1,4-divinylbenzène, d'acrylate d'allyle et/ou de méthacrylate d'allyle,
la somme des quantités valant 100% en poids.

5. Procédé selon l'une des revendications 1 à 4, **caractérisé en ce qu'**il s'agit, pour le composé organique de diisocyanate ou de polyisocyanate I, d'un composé aromatique de diisocyanate ou de polyisocyanate.

6. Procédé selon l'une des revendications 1 à 5, **caractérisé en ce qu'**il s'agit, pour le composé organique de diisocyanate ou de polyisocyanate I, de diisocyanate de 2,2'-diphénylméthane (2,2'-MDI), de diisocyanate de 2,4'-diphénylméthane (2,4'-MDI), de diisocyanate de 4,4'-diphénylméthane (4,4'-MDI) et/ou de diisocyanate oligomère de diphénylméthane.

7. Procédé selon l'une des revendications 1 à 6, **caractérisé en ce qu'**on utilise une fibre naturelle comme substrat sous forme de fibres.

8. Procédé selon l'une des revendications 1 à 7, **caractérisé en ce que** le substrat sous forme de fibres est mis en contact, dans le sens d'écoulement du gaz, d'abord avec la dispersion aqueuse du polymère P et ensuite seulement avec le composé organique de diisocyanate ou de polyisocyanate I.

9. Procédé selon l'une des revendications 1 à 8, **caractérisé en ce que** la quantité de polymère P représente 0,1 à 15% en poids et la quantité de composé organique de diisocyanate ou de polyisocyanate I représente 0,1 à 10% en poids, à chaque fois par rapport à la quantité du substrat sous forme de fibres.

10. Procédé selon l'une des revendications 1 à 9, **caractérisé en ce que** le composite thermoformable de polymère/fibres obtenu est plat et présente un poids surfacique ≥ 500 et ≤ 30.000 $g/m^2$.

11. Composite thermoformable de polymère/fibres pouvant être obtenu selon un procédé selon l'une des revendications 1 à 10.

12. Utilisation d'un composite thermoformable de polymère/fibres selon la revendication 11 pour la fabrication d'une pièce moulée de polymère/fibres qui se distingue par sa forme du composite thermoformable de polymère/fibres utilisé.

13. Procédé de fabrication d'une pièce moulée de polymère/fibres, **caractérisé en ce qu'**un composite thermoformable de polymère/fibres selon la revendication 11 est chauffé à une température ≥ Tg, le composite de polymère/fibres ainsi

obtenu est amené à une température ≥ Tg dans la forme souhaitée de la pièce moulée de polymère/fibres, puis la pièce moulée de polymère/fibres obtenue est refroidie, tout en conservant sa forme, à une température < Tg.

**14.** Procédé de fabrication d'une pièce moulée de polymère/fibres selon la revendication 13, **caractérisé en ce que** le processus de chauffage du composite de polymère/fibres est effectué au moyen d'un passage entre deux cylindres métalliques agencés avec des axes parallèles et tournant dans le sens du passage,

a) au moins l'un des cylindres métalliques présentant une structure de surface définie de la surface de contact avec le composite de polymère/fibres ainsi qu'une température ≥ Tg,
b) la fente entre les surfaces de contact de deux cylindres métalliques étant inférieure à l'épaisseur du composite de polymère/fibres et
c) le passage du composite de polymère/fibres entre les surfaces de contact des deux cylindres métalliques ayant lieu à une vitesse qui correspond à la vitesse de rotation des surfaces de contact des deux cylindres métalliques.

**15.** Procédé selon la revendication 13 ou 14, **caractérisé en ce qu'**un matériau décoratif plat est appliqué sur le composite de polymère/fibres avant ou après l'étape de chauffage.

**16.** Composite de polymère/fibres pouvant être obtenu selon un procédé selon l'une des revendications 13 à 15.

**17.** Utilisation d'une pièce moulée de polymère/fibres selon la revendication 16 en tant que revêtement de sol, pièce moulée de meuble ou pièce décorative murale.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 200773218 A
- WO 2017140520 A
- US 4269749 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 40419 B
- EP 567812 A
- EP 614922 A
- DE 4213965 A
- DE 10013186 A
- DE 10013187 A


### In der Beschreibung aufgeführte Nicht-Patentliteratur


- **A. ECHTE**. Handbuch der Technischen Polymerchemie. VCH, Weinheim, 1993
- **B. VOLLMERT**. Grundriss der Makromolekularen Chemie. E. Vollmert Verlag, 1988
- Methoden der organischen Chemie. **HOUBEN-WEYL**. Makromolekulare Stoffe. Georg-Thieme-Verlag, 1961, vol. XIV/1, 411-420
- Methoden der organischen Chemie. **HOUBEN-WEYL**. Makromolekulare Stoffe. Georg-Thieme-Verlag, 1961, vol. XIV/1, 192-208
- *Encyclopedia of Polymer Science and Engineering*, 1987, vol. 8, 659
- **D.C. BLACKLEY**. *High Polymer Latices*, 1966, vol. 1, 35
- **H. WARSON**. *The Applications of Synthetic Resin Emulsions*, 1972, 246
- *D. Diederich, Chemie in unserer Zeit 24*, 1990, 135-142
- Emulsion Polymerisation. Interscience Publishers, 1965
- **F. HÖLSCHER**. Dispersionen synthetischer Hochpolymerer. Springer-Verlag, 1969
- Encyclopedia of Polymer Science and Technology. John Wiley & Sons Inc, 1966, vol. 5, 847
- **T.G. FOX**. *Bull. Am. Phys. Soc.*, 1956, 123
- Ullmann's Encyclopädie der technischen Chemie. Verlag Chemie, 1980, 18
- **J. BRANDRUP** ; **E.H. IMMERGUT**. Polymer Handbook. J. Wiley, 1966
- Ullmann's Encyclopedia of Industrial Chemistry. Verlag Chemie, 1992, 169
- **A.N.PAPADOPOULOS** ; **C.A.S. HILL** ; **E. TRABOULAY** ; **J.R.B. HAGUE**. *Isocyanate Resins for Particleboard: PMDI vs EMDI*, 2002, http://www.fidelityco.net/pdf/emdi-pmdi.pdf
- **R. TAN**. *Wood*, 2012, vol. 493, https://pdfs.semanticscholar.org/eeda/43ac33b168e324473de1e74b74aff4e85b13.pdf